(19) Europäisches Patentamt
European Patent Office
Office européen des brevets

(11) **EP 1 365 622 B1**

(12) **EUROPEAN PATENT SPECIFICATION**

(45) Date of publication and mention
of the grant of the patent:
**15.02.2006 Bulletin 2006/07**

(51) Int Cl.:
***H04Q 11/04*** *(2006.01)*

(21) Application number: **02291249.7**

(22) Date of filing: **21.05.2002**

(54) **A timeslot management method and downstream frame structure for a TDMA network**

Zeitschlitzverwaltungsverfahren und Abwärtsrahmenstruktur für ein TDMA Netzwerk

Procédé d'allocation d'intervalles de temps et structure de trames avals pour un réseau AMRT

(84) Designated Contracting States:
**AT BE CH CY DE DK ES FI FR GB GR IE IT LI LU MC NL PT SE TR**

(43) Date of publication of application:
**26.11.2003 Bulletin 2003/48**

(73) Proprietor: **ALCATEL**
**75008 Paris (FR)**

(72) Inventors:
• **Gyselings, Tim**
**2100 Deurne (Antwerp) (BE)**
• **Ringoot, Edwin Augustus Philimena**
**4564 CW  St. Jansteen (NL)**
• **Six, Erwin Alfons Constant**
**9270 Laarne (BE)**

(74) Representative: **Narmon, Gisèle Marie Thérèse et al**
**Alcatel Bell N.V.,**
**Francis Wellesplein 1**
**2018 Antwerpen (BE)**

(56) References cited:
**EP-A- 0 957 654**          **US-A- 5 978 374**

• **STOJANOVSKI S ET AL: "A block reservation approach for traffic management over SuperPON"** ATM WORKSHOP PROCEEDINGS, 1998 IEEE FAIRFAX, VA, USA 26-29 MAY 1998, NEW YORK, NY, USA,IEEE, US, 26 May 1998 (1998-05-26), pages 253-260, XP010280497 ISBN: 0-7803-4874-5
• **SIDDHARTHA DEVADHAR: "Dynamic bandwidth allocation over passive optical networks"** TERAWAVE COMMUNICATIONS, [Online] 17 August 2001 (2001-08-17), XP002197155 Retrieved from the Internet: <URL:www.terawave.com/news/dynamic_ban dwid th_allocation.htm> [retrieved on 2002-04-23]
• **DROUBI M ET AL: "Dynamic bandwidth allocation for the HFC DOCSIS MAC protocol"** PROCEEDINGS NINTH INTERNATIONAL CONFERENCE ON COMPUTER COMMUNICATIONS AND NETWORKS (CAT.NO.00EX440), PROCEEDINGS NINTH INTERNATIONAL CONFERENCE ON COMPUTER COMMUNICATIONS AND NETWORKS, LAS VEGAS, NV, USA, 16-18 OCT. 2000, pages 54-60, XP002197156 2000, Piscataway, NJ, USA, IEEE, USA ISBN: 0-7803-6494-5
• **"Broadband optical access systems based on Passive Optical Networks"** ITU-T RECOMMENDATION G.983.1, October 1998 (1998-10), XP002223805

**Description**

The present invention relates to a timeslot management method according to the preamble of claim 1, a downstream signal frame structure for use by such a timeslot management method according to the preamble of claim 6, a network terminal and a central station according to the preamble of, respectively, claim 8 and claim 9, for using such a timeslot management method.

A timeslot management method or Time Division Multiple Access system, shortly called TDMA- system, uses in the telecommunication network a shared medium i.e. one common link and a plurality of branches. A line terminator or central station at the opposite side of the tree-like network, generates grants which are downstream distributed in order to allow the network terminators or network terminals, at the ends of the individual branches, to transmit, upon recognition of its own identity in a received grant or permit, an upstream data-packet in a predefined upstream timeslot. In this point-to-multipoint system, each timeslot that is filled with a data-packet at one of the network terminals, takes its own predefined place in the upstream frame over the common link in order to generate one common upstream data-stream without having collision. It has to be understood that well known predefined ranging times have to be respected at the network terminals.

Such a timeslot management method is for instance known in the art, e.g. from the "standard of ITU-T Telecommunication Standardisation Sector of ITU - Series G: Transmission Systems and media, digital systems and networks - Broadband optical access systems based on Passive Optical Networks (PON) - ITU-T Recommendation G.983.1. ".

In Passive Optical Network standard describes PON based systems that allocate upstream bandwidth (from network terminals to central station) using 8-bit grant codes that are sent downstream (from central station to network terminals) in physical layer and operation and maintenance cells, shortly PLOAM cells. These PLOAM-cells are, according to the standard, predefined cells of the predefined upstream frame format and comprise besides the grant-information physical layer operation and maintenance information.

The grants in the PLOAM cells specify which network terminals is to be sent upstream information with a granularity of 1 upstream timeslot of the predefined upstream frame-format at a time.

Furthermore, it is known that recently developed network terminals are supporting more than one quality of service class, shortly QoS class. Hereby the prior art time division multiple access network creates a differentiation among different service categories pertaining to different packet or bitstreams that the network terminals want to transfer upstream to the central station.

Such a service category is e.g. a service category for which only a fixed cell rate is specified, for instance the constant bit rate category as specified by the ATM Forum specification AF-TM-0056.000 dated April 1996 in case the bitstreams consist of ATM streams. Another service category is e.g. the "best effort" service category whereby a network terminal intends to send packets pertaining to an unspecified bit rate service category, described in the same ATM Forum specification, whereby a maximum peak cell rate equivalent bandwidth during a certain time period is reserved, while the packets are only to be transferred at irregular instances in short bursts.

In order to support the different service categories the known prior art methods comprises a step of classifying the upstream data packets within the network terminals in accordance to its associated service categories.

A first approach, with however more complexity at the network terminals, is to let the terminals for itself decide which queue of which service category is to be allowed to provide a data packet in order to fill the upstream timeslot being granted by the central station.

A second approach, the centralized one, is to provide the central station the ability to make this decision. In this way, the central station is enabled to distribute the available bandwidth of the common link, over the different service categories of the different network terminals according to the individual demands.

A system in the central station that grants bandwidth to a network terminal or its service category upon a request off the network terminal is called dynamic Bandwidth Allocation or shortly DBA.

According to the known systems, a grant being intended for one of the network terminals will comprise a plurality of service category identities, also called queue identities, which are each, associated to such a service category within the network terminal. Hereby the network terminal is enabled to transfer, upon detection of one of the queue identities, a predetermined amount of upstream data packets from its corresponding service category. Indeed, now that access networks with the dynamic bandwidth allocation of the upstream bandwidth are promoted and being standardised in future versions of the above mentioned Recommendation, multiple data grants per network terminal are used. This allows the central office to control which service class e.g. continuous bit rate, or unspecified bit rate, ... in the network terminal is allowed to send an upstream data packet. Such an access network is described in e.g. the article 'Dynamic Bandwidht allocation in Passive Optical Networks' by Michel Tassent, Edwin Ringoot, Tim Gyselings, Nico Janssens and Peter Vetter, published at the 26-29 June, 2001 NOC 2001 - Networks and Optical Communication - Conference (Edited by A. Lord, D.W. Faulkner and D.W. Smith). This article describes extended functionality for the broadband optical access systems defined in ITU-T Recommendation G.983.1. This article investigates the efficiency and Quality of Service QoS improvements that can be obtained by the introduction of Dynamic Bandwidth allocation DBA compared to static bandwidth allocation in an ATM based Passive Optical access Network APON. The Dynamic Bandwidth Allocation DBA demonstrator allows the implementation of downstream grants either per Optical Network Termination or either subdivided per Traffic container class, shortly called T-Cont, or called in this application service category.

The service traffic containers are used for the management of upstream bandwidth allocation in the section of the Transmission Convergence layer. It is in these traffic containers within the network terminators that the upstream data packets are classified in accordance to its associated service categories.

A known implementation in such networks, supporting different service categories, is that one data grant is associated to one traffic container. This is *also described on page 134, paragraph 4 of the above-mentioned article.* Herein, it is explained that, in the event when the coloured grant option is activated i.e. the mode wherein the grants are carrying an identification of the T-CONT's, i.e. an identification of the service category, in order to allow upstream transmission of upstream data-packets by the respective service categories, an assignment of one grant per service category type is made. According to this implementation and in line with the above mentioned standard, a first data grant of 8 bits might be allocated to a network terminal and furthermore additional 8 bit data grants might be associated to a service category within the network terminal in order to allow transmission of upstream data packets in a predefined upstream timeslot.

This means that when such an 8-bit grant is allocated to a service category within a network terminal, the grant comprises one service category identity of 8 bits which identifies the associated service category. This service category identity of 8 bits, uniquely identifies the service category independently of the fact that this service category is comprised within the one or another network terminal.

A disadvantage of such an allocation of 8-bit grants to each service category within the different network terminals is that, if many network terminals are connected in the tree-like network, only a limited number of upstream data grants per network terminal is allowed due the limited number of combinations of the 8 bits for definition of an 8 bit grant. Hereby, the number of predefined service classes is limited.

The European patent publication with number EP1315396 and filing date 22 November, 2001 and with title : "Method to assign upstream timeslots to a network terminal, and network terminal and central station for performing such a method, and time division multiple access network comprising such a network terminal or central station.", describes a new structure for a grantset. This two-parts structure comprises, respectively, an identification of the network terminal, and an identification of a service category i.e. service category identifier (service category identity) which points to a traffic container i.e. service category of the network terminal that received the permission of the central station to send data. More than one grant code might be included in a grant set.
In this way, this known method comprises the following steps :

- downstream distributing by a distributor of the central station a plurality of downstream grantsets; and
- receiving with a receiver of a network terminal one of the plurality of downstream grantsets; and
- recognizing with a first recognizer of the network terminal the grantset as being associated to the network terminal by means of a network terminal identity being comprised the grantset; and
- inserting with a inserting means of the network terminal in upstream data an upstream data packet of each service category of the network terminal for which a service category identity is recognized in the grantset by a second recognizer of the network terminal; and
- transmitting with a transmitter of the network terminal the upstream data towards the central station in one or more upstream timeslots.

A special case is described for a concatenation of 4 upstream timeslots allocated to a certain network terminal. In that case the grant set consists of one 8-bit network identifier to determine which network terminal is allowed to use four upstream timeslots and four 6-bit service category identifier grant codes, with only have a local meaning, to determine which service category of the network terminal is allowed to use such an upstream timeslot. Such a grant set consists out of two fields, a first field or network identifier field (8 bits) and a second field or service category grant codes field (4x6bits). The two fields together have a certain meaning for each network terminal. Indeed, each network terminal knows exactly where in the distributed downstream PLOAM cells the grant information is to be found and how exactly this grant information is divided in grant sets with its respective predefined first field length and predefined second field length. Hereby the second field comprises service category identifiers with only a local meaning since in combination with the network terminal identifier in the first field, the right traffic container of the right network terminal will fill the upstream timeslot.

This means that such a downstream signal frame structure for use in a time division multiple access network that is distributed from the central station to the plurality of network terminals comprises a plurality of grantsets whereof each grantset, comprises a first field and a second field. The first field comprises a network terminal identity which is associated to a network terminal and the second field comprises a once predetermined number of subfields, which is fixed for the whole system, whereof each one comprises a service category identity that is associated to one of a plurality of service categories (S1, S2, S3, ..., Sq) of the network terminal (NTi).

However, such a predefined structure provides a stricter allocation of the upstream bandwidth. Indeed, as in the above-mentioned example, the assigned upstream bandwidth is restricted to one or more multiples of 4 upstream timeslots, in the upstream frame, being transmitted by a same network terminal. This means that the assigned upstream bandwidth to one network terminal by means of one grantset is always a predetermined amount i.e. 4 of upstream timeslots. This restriction must be taken into account by the central station, which calculates the distribution of the upstream bandwidth with its Dynamic Bandwidth Allocation algorithm.

An object of the present invention is to provide a timeslot management method, a downstream signal frame structure for use by such a timeslot management method, a network terminal and a central station for using such a timeslot management method and a time division multiple access network that comprises such a network terminal or such o central station, such as the above known ones but wherein the upstream bandwidth over the common link, is allocated among the different service categories of the different network terminals, not with the restrictions of a fixed number in function of one or more multiples of a predetermined amount of upstream timeslots, but according to a flexible dynamic way.

This is realized with the timeslot management method of claim 1, the downstream signal frame structure for use by such a timeslot management method according to claim 6, the network terminal and the central station according to, respectively, claim 8 and claim 9, for using such a timeslot management method. Indeed, the timeslot management method according to the present invention further comprises the steps of :

- predetermining with a determining means of the central station for each one of the plurality of downstream grantsets a number m of subfields and thereby providing a number e.g. m=5 of subfields for a particular downstream grantset; and
- inserting with a central station inserting means of the central station in each subfield of the number m=5 of subfields of that downstream grantset a service category identity that is associated to a service category of the network terminal. Hereby determines the number of m subfields and therewith the number of m service category identities, a number n of potential consecutive upstream timeslots, of the one or more timeslots, for transmission by the network terminal of an upstream data packet of one of its service categories.

The number m of subfields and therewith the number m of service category identifiers in the second field is not fixed anymore. Hereby becomes the upstream assigned bandwidth with one grantset to the different service categories of a particular network terminal flexible. The global upstream bandwidth, being assigned by means of different grantsets, to a particular network terminal, is not restricted anymore to one or more multiples of a predetermined amount of upstream timeslots.

Indeed, the number m of subfields and therewith the number of m service category identities is determined by the determining means of the central station for every new grantset that is comprised in the downstream signal. Such a determined number of m service categories is, determined according to the actual calculated allowed bandwidth for the different service categories of a particular network terminal. The number m of subfields and service categories becomes a variable number and therewith becomes the number of n consecutive upstream timeslots, being allocated by means of one grantset, to a particular network terminal, also variable.

The allowed upstream bandwidth for the different service categories of one network terminal, being allocated by one grantset, becomes a multiple of one upstream timeslot whereby this multiple is determined for every new grantset assigned to a particular network terminal.

Both numbers m and n are not fixed numbers over the lifetime of a timeslot management system but are both variable numbers. Also the length of the different downstream grantsets becomes variable i.e. the length of the different downstream grantsets is not necessarily the same but might be different over the lifetime of the system.

It has to be remarked that the number of service categories m in the second field of the grantset is not necessarily equal to the number n of upstream timeslots. In the event when the central station and a network terminal are both designed to transmit e.g. a data packet of a predetermined service category in e.g. a double timeslot because of its initial data packet length, upon recognition of its service category identity in the second field of the grantset, the number of service categories in the grantset becomes one lower as the number of assigned upstream timeslots. Such a system looses however a degree of flexibility.

Another remark regarding the flexibility degree of the allocated upstream bandwidth is that such a system might still be limited to e.g. a maximum number of upstream timeslots being permitted to the different service categories of one network terminal. This limitation might still be laid down by means of the installed dynamic bandwidth allocation algorithm. Hereby, the determining means of the central station limits the number of service categories to this maximum whereby only a limited amount of service category identities is included in the associated grantset and, upon the respective recognition of service category identities, only a limited amount of upstream timeslots will be used by this one network terminal.

As it is explained above, a plurality of downstream grantsets might be transported in a downstream PLOAM cell. Due to the variable number of service category identities in the second field of a grantset, the total length of a grantset becomes variable. Indeed, the length of the grantset becomes variable and reaches from a network terminal identifier up to the following network terminal identifier, hereby allocating a variable number of upstream timeslots to a certain network termination. However, the borders of a grantset needs to be recognized by the different network terminals in order to be enabled to recognize firstly the network terminal identity and secondly the number of m service category identities.

A possible way to signal the length of a grantset is e.g. to insert for each grantset a value for a length-parameter at a predefined place in the same PLOAM cell. This would however require extra bytes in the PLOAM cell.

A possible way to recognize the first field and the potential second field, without spending extra bytes in the PLOAM cell, is described in claim 2 and claim 8.

Indeed, the method according to the present invention further comprises that the step of recognizing the grantset as being associated to the network terminal comprises, recognizing for at least one first predefined bit of the grantset a first predefined value. Hereby is the first field recognized in the grantset and might therewith the network terminal identity be identified. Furthermore comprises the step of recognizing a service category identity in the downstream grantset, recognizing for at least one second predefined bit of the grantset a second predefined value. Hereby is one of a number (m) of subfields of the second field determined in the grantset and might the said service category identity be identified.

Indeed, while remaining with the definition of a network terminal identifier field and a service category identifier field, the recognition of a network terminal identifier field in the grantset, is not implemented by combining the knowledge of predefined identifier-length with its predefined place in a grantset having a predefined length, but by combining this knowledge of predefined identifier-length with a predefined value for e.g. the first bit of the identifier. Hereby, by using a first predefined value for such predefined bit in a first field of the grantset, the presence of a network terminal identifier in this first field might be detected by a network terminal. Furthermore by using a second predefined value for such a predefined bit in the second field, the presence of a service category identifier in a subfield of the second field might be detected. As long as this second predefined value is confirmed in a next field i.e. potential next subfield of the second field, a next service category identifier can be identified. Once the first predefined value for the first predefined bit is again detected in a subsequent field, a new grantset with a new first field that comprises a network terminal identity is detected by the network terminal. Hereby, the network terminal also realizes that the proceeding grantset was completed with the previous subfield.

The predefined value for one of the bits doesn't need to be the first bit, alternatively, a predefined value for one of the other bits can make the difference between a terminal identifier and a service category identifier.

The presence of a network terminal identifier in a grantset has the function of defining, in combination with a service category identifier which only has a local meaning for the network terminal itself, a service category among all service categories of all network terminals being allowed to release an upstream data packet.

A second function of the presence of the network terminal identifier is described in claim 3. This claim describes that the method according to the present invention comprises a step of upon recognition of its network terminal identity in the grantset by the network terminal, transmitting to the central station, in a first predetermined upstream timeslot, of the one or more timeslots, management information such as upstream physical layer operation and maintenance information, dynamic bandwidth allocation information and synchronization information.

Since all upstream timeslots being used by a same network terminal to transmit its upstream data comprising the upstream data packets of its service categories, are consecutive upstream timeslots, information such as synchronization information doesn't needs to be repeated for each upstream timeslot but might be introduced only once e.g. in a first upstream timeslot especially dedicated for such information.

Furthermore, since every network terminal needs to transmit e.g. upon request of the central station or on a regular base, upstream physical layer operation and maintenance information, such information might as well be introduced in this first upstream timeslot.

Furthermore, since every network terminal needs to signal to the central station its actual dynamic bandwidth allocation requirements, such information might as well be introduced in this first upstream timeslot.

Such an implementation of the present invention with such a first special dedicated upstream timeslot, and in the event of an implementation with a one to one relation between comprised service category identifier and allocated upstream timeslot, the number of identifiers (network terminal identifiers and service category identifiers i.e. m + 1 ) in one grantset is equal to the number of upstream timeslots (n+1) being allocated to a certain network terminal :

$$(m + 1 = n + 1).$$

A special implementation is described in claim 4. Indeed, in the event of such an above mentioned double functionality of the presence of the network terminal identity in the grantset, and in the event when the determining means of the central station determines that the number of subfields and hereby the number of service category identities equals zero, no second field is present in the grantset. This situation might occur e.g. in the event of no or small service category queues for the different service categories of a network terminal. Hereby the dynamic bandwidth allocation algorithm determines, upon reception of the actual queue requirements of this terminal that e.g. no upstream bandwidth has to be allocated to none of the service categories of this terminal. Although that, in this case, no data-grants are to be transmitted to this terminal, it might as well be time that e.g. new bandwidth allocation information has to be provided by the network terminal to the central station. Hereby it is sufficient to transmit by the central station a grantset with only a first field that comprises the network terminal identity. Hereby only one upstream timeslot will be transmitted that comprises the management information.

Hereby it becomes also clear why the grantset, according to the present invention, comprises an optional second field and why the number n of the consecutive upstream timeslots is a potential number.

Finally, it has to be remarked that, according to the present invention, the code word length of the identifiers doesn't need to be all-equal. Indeed, the length of an identifier might be indicated by a predefined value for e.g. the second bit of each codeword. This will become clear with an example whereby e.g. if the second bit of a codeword is equal to 1, a network terminal should read an 8-bit codeword and if the second bit of the codeword is equal to 0, the network terminal should read an 6-bit codeword. This length information might be used as well for the network identifiers as for the service category identifiers, whereby the network terminals are still enabled to determine the different fields in the grantsets. However such an implementation would limit the number of combinations of the available bits for the definition of the identifiers.

A more efficient implementation is described in claim 5 wherein the network terminal identifiers and the said service category identities are defined with a same predefined word-length.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein :

Figure 1 represents a scheme of a communications network wherein the present invention is applied; and

Figure 2 represents the content of a downstream PLOAM cell according to prior art; and

Figure 3 represents the content of a downstream PLOAM according a possible implementation of the present invention; and

Figure 4 represent the content of a example grantset according to a possible embodiment of the present invention.

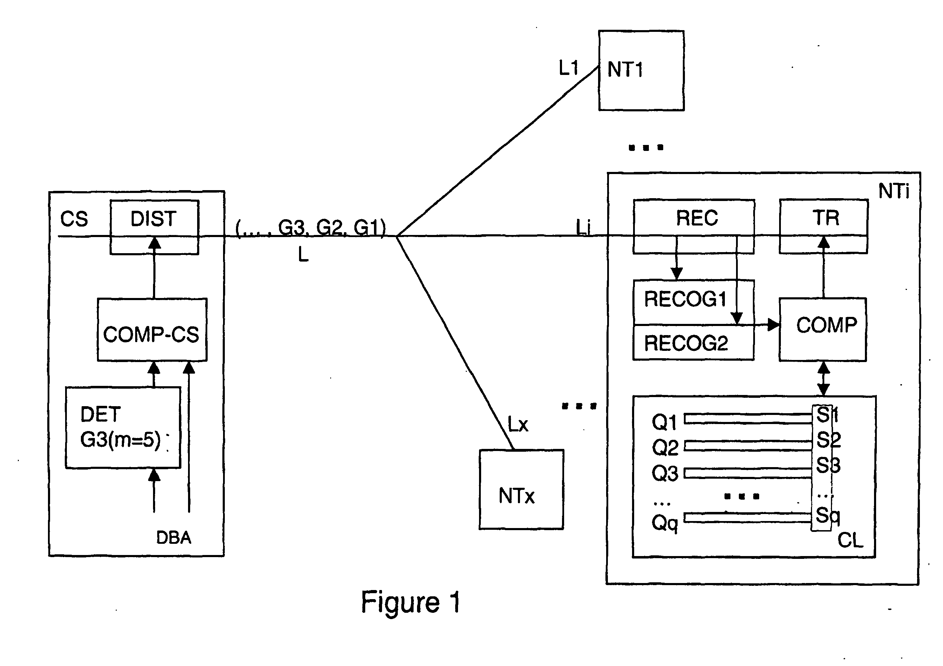

The working of the different devices according to the present invention in accordance with its telecommunication environment that is shown in Figure 1, will be explained by means of a functional description of the different blocks shown therein. Based on this description, the practical implementation of the blocks will be obvious to a person skilled in the art and will therefor not be described in details.

The communications network of Figure 1 is composed of a central station CS and network terminals NT1, ..., NTi, ... to NTx. The central station CS is coupled to these optical network units via the cascade connection of a common transmission link L, for instance an optical fibre link, and respective individual network terminal links L1,...,Li,...,Lx, also for instance consisting of optical fibres . The network hence has a point-to-multipoint architecture in the downstream direction, which is the direction from the central station CS to the network terminals NT1 to NTx, and a multipoint-to-point architecture in the upstream direction, i.e. the direction from the network terminals NT1 to NTx towards the central station CS.

in the downstream direction, the central station CS broadcasts information to all network terminals NT1 to NTn. The information is encapsulated in so-called downstream frames. In the opposite direction, the network terminals NT1 to NTx commonly share the link L in a time-multiplexed way. This means that different network terminals transmit information to the central station CS in different timeslots. Each network terminal thus sends upstream information in short bursts to the central station CS. The upstream timeslots constitute so-called upstream frames.

To be allowed to send a burst in an upstream timeslot, a network terminal, for instance NTi, has to receive a permission or grant from a medium access controller MAC (not shown), usually included within the central station CS.

At regular time intervals such permissions are downstream broadcasted by the medium access controller by means of a so-called PLOAM (Physical Layer Operation And Maintenance) cell wherein the contents of grant fields precisely define which network terminal is allowed to occupy which upstream timeslot.

It has to be remarked that although in this preferred embodiment the use of PLOAM cells to distribute the downstream grantsets is described, such a use is not an essential feature of the present invention. Indeed, small modification evident to a person skilled in the art might be applied in order to insert the downstream-distributed grantsets at other places in the downstream frame.

In a multi-service network, network terminals are adapted to transmit several bitstreams, pertaining to several connections. In case of ATM bitstreams, pertaining to different ATM connections, these are associated with a set of traffic and connection parameters, related to the ATM service category associated with the connection, and which parameters are declared to the network by the user connected to the network terminal, during the connection-set-up, by means of signaling parameters. These traffic and connection parameters are for instance a peak cell rate, abbreviated with PCR, a minimum cell rate, abbreviated with MCR, a sustainable cell rate, abbreviated with SCR, etc. These parameters are standardized by the ATM Forum by specification AF-TM-0056.000 dated April 1996.

A network terminal, such as NTi of Figure 1, adapted to transmit several bitstreams associated to several service categories, therefore includes for each service category one associated storage queue, in which subsequent cells or packets of the bitstreams associated with this service category, are stored. Thus in case four service categories are supported by this network terminal, four respective storage queues are included. These service categories may for instance comprise the constant bit rate, abbreviated with CBR, the variable bit rate, abbreviated with VBR, the available bit rate, abbreviated with ABR and the unspecified bit rate, abbreviated with UBR, service categories, again specified by the mentioned ATM forum specification.

It has to be remarked here that different service queues within a same network terminal might be associated to a same kind of service category but e.g. serving different connections with different kinds of QoS contracts.

These storage queues included within network terminal NTi are schematically depicted in Figure 1 with Q1, Q2, Q3, ...Qq for the general case of q service categories. In order to classify incoming data packets from one incoming bitstream, the network terminal NTi includes a classifier CL adapted to classify incoming data packets from bitstreams, in accordance to their associated service category S1, S2, S3, ...Sq. It has to be remarked that, in order not to overload the Figure 1, the inputs via which the classifier is receiving the different incoming bitstreams, are not shown. This is also going beyond the aim of the present invention.

The classifier CL classifies incoming data packets in accordance to associated service categories S1,S2, S3, ..., Sq which are then succeeding packets of which are stored in the respective associated storage queues Q1, Q2, Q3, ..., Qq.

For ATM networks, examining the header of each ATM cell or packet may perform the sorting. This header information includes the VPI/VCI identifier, which is during connection set-up uniquely linked to a particular service category. The classifier is then adapted to extract this header information, compare this to connection set-up information previously captured and stored during the connection set-up phase, and to accordingly determine the associated service category of the available service categories S1, S2, S3, ..., Sq. Since a person skilled in the art further knows such classifier, these will not be further described within this document.

According to the prior art, a grant transmitted to a network terminal needs to include the network terminal identifier e.g. NTi in order to allow upstream transmission of a number of upstream data packets in an upstream timeslot. However, for multi-service networks, it is clear that the grants transmitted to each network terminal, now not only have to include an identifier for the network terminal itself, but also an identifier concerning the service category of the bitstream for which transmission is allowed. Since per service category one storage queue is associated, the service category identifier thus also corresponds to the storage queue identifier. Therefor, and in order not to complicate the present Figures, no differentiation is made between the service category identifiers, service categories itself.

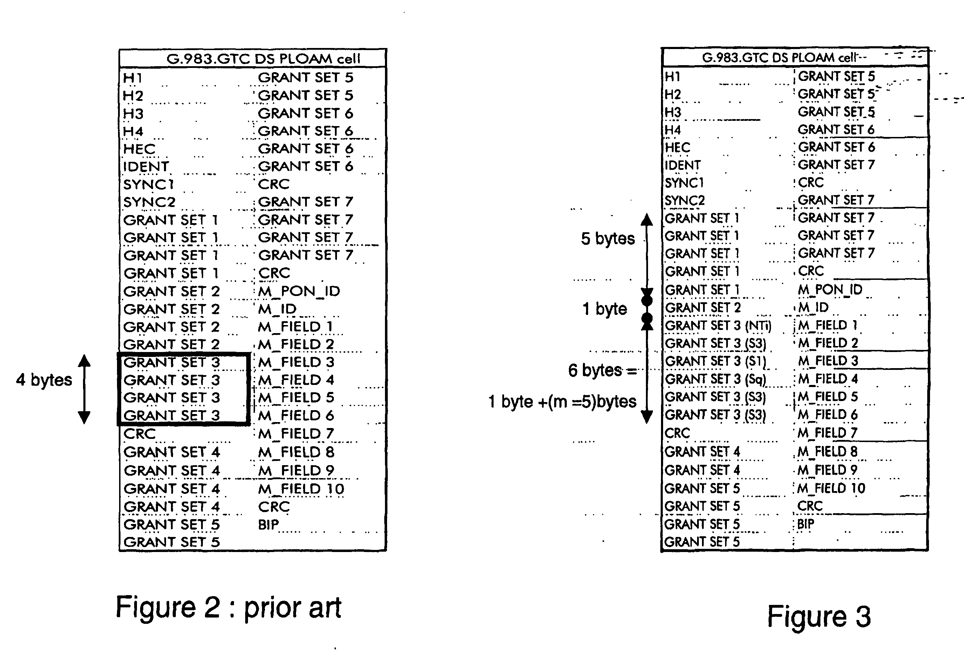

A known implementation of such a bitstream of grants is shown in Figure 2. Referring to figure 2, a downstream PLOAM cell according to the standard G.983.1 is shown. Herein, 27 bytes are predefined to include 8-bit grants.

According to an above-described prior art embodiment, these 27 bytes are subdivided in grantsets of 4 bytes. Indeed, a number of bytes are reserved in the PLOAM cell to include a bitstream of grantsets G1, G2, G3, G4, G5, .... One grantset comprises four times 8 bits. In figure 2, e.g. grant set 3 is shown. Figure 2 shows the content of such a four-byte grant according to this prior art embodiment and comprises besides four queue identities also a network terminal identity. The first byte is used to insert a network terminal identity e.g. NTi of the network terminal NT in a first field of the grantset e.g. G3. Herefor a network terminal identity structure of 8 bits, is used. The three following bytes are used to insert four service category identities in a second filed of the grantset : four service category identities e.g. S3, S1, Sq and S3 of 6 bits are herein comprised.

These 6-bit service category identities only have a local meaning. This means that in a particular grantset the same bit-value of a service category identity (second field) could be used in combination with another network terminal identity (first field) whereby the service category with that service category identity within this other network terminal would be entitled to provide an upstream data-packet. So service categories that are comprised in different network terminals are using a same service category identity in order to be identified. However, in combination with the network terminal identity, these service category identities are getting a local meaning and will be uniquely identified among all service categories of all network terminals. A combination of a service category identity with a network terminal identity is required in order to obtain a unique identification for a particular service category.

In distinction with the definition of a grantset G3 of the prior art, a grantset G3 according to the present invention comprises a number of m subfields in the second field, whereby this number of m subfields is determined by a determiner DET of the central station CS.

indeed, Figure 1 shows that the central station CS comprises this determiner DET1, a central-station-inserter COMP-CS and a distributor DIS. The determiner DET is coupled to at least part of the MAC controller (represented in figure 1 by DBA Dynamic Bandwidth Allocation). The DBA is also coupled to the central-station-inserter COMP. The central-station-inserter COMP is coupled to the distributor DIST that is coupled on its turn to an output of the central station CS.

The central station determines according to the MAC controller to which service category of which network terminal upstream bandwidth is to be allocated. Hereby the central station determines that upstream bandwidth is to be allocated to the network terminal NTi. The central station decides to compose a downstream grantset G3 for this network terminal NTi and comprises the network terminal identity in the first field of the grantset G3.

It is not the aim of this present invention to describe how this MAC controller defines what service category of which network terminal receives the right to upstream bandwidth. The aim of the present invention is that this DBA functionality provides this information of permitted bandwidth to the determiner DET and the central-station-inserter COMP of the central station.

In this way the determiner DET is enabled to predetermine for each one of the plurality of downstream grantsets G1, G2, G3, ... and based upon the received required upstream bandwidth for the different service categories of the network terminals NTi, a number m of required subfields. For instance a number of m=5 subfields for the second field of the grantset G3 is required to take care of the permitted bandwidth (by the DBA) for the different service categories of the network terminal.

The central-station-inserter COMP_CS is enabled to insert in each subfield of the number m of subfields of the second field of the downstream grantset G3 a service category identity e.g. S3 that is associated to a service category S3 of the network terminal NTi. Each service category e.g. S3 is one of the service categories wherefore the DBA indeed permitted upstream bandwidth.

Hereby a grantset G3 is composed that comprises a first field with the network terminal identity NTi and a second field with a number of m subfields that each comprises a service category identity. The value of the bits that determine an identity of a service category is determined according to a predefined relation between service category and network terminal. This predefined relation is known by the central station and by the network terminal. This predefined relation enables the system to work with, as above explained, service category identifiers that only have a local meaning.

Furthermore, it has to be explained that the central station CS might as well decide that a particular network terminal is not allowed to some upstream bandwidth but that it should transmit upstream management information. Such a situation can occur in the event when e.g. the central station requests updated dynamic bandwidth allocation information. Hereby, a grantset (See Figure 3, grantset 2) with only the network terminal identity in the first field is created. The determiner DET decides that that the number of subfields m is zero and no service category identities are to be inserted by the central-station-inserter COMP.

The different grantsets e.g. G3(grantset3) and G2(grantset2) are forwarded to the distributor DIS for downstream distribution in one of the downstream physical layer and maintenance PLOAM cells.

Figure 1 further shows that a network terminal e.g. NTi comprises a receiver REC, a first recognizer RECOG1, a second recognizer RECOG2, the above mentioned classifier CL, a transmitter TR and an inserter COMP.

The receiver REC is coupled to an input of the network terminal NTi in order to receive a downstream PLOAM cell. The network terminals are enabled to recognize in the bitstream of this downstream PLOAM cell the beginning of the included downstream grantsets G1, G2, G3, ...

As such a first field of a first grantset is examined by e.g. the network terminal NTi. When the first field is indeed recognized as a field that comprises a network terminal identity, the network terminal identity is examined and eventual recognized as its own identity.

How this first field is recognized as a field that contains a network terminal identifier and not a service category identifier will be explained in a later paragraph.

The first recognizer RECOG1 of the network terminal NTi is enabled to recognize the grantset e.g. G3 as being associated to him by means of recognition of its own identity in the first field of the grantset G3.

In the event when the network terminal NTi recognizes its own network terminal identity (NTi), the network terminal knows that the grantset is intended for him. The first recognizer RECOG1 provides a control signal to the second recognizer RECOG2.

Upon recognition of its own identity the first recognizer RECOG1 also signals the appropriate functional blocs to provide to the inserter COMP an upstream PLOAMS cell with its predefined management information. This upstream PLOAM cell is inserted by the inserter COMP in the upstream data i.e. the upstream data stream under preparation for upstream transmission.

Upon reception of the control signal from the first recognizer RECOG 1, the second recognizer RECOG2 is enabled to recognize in the grantset G3 a service category identity e.g. S3 that is associated to a service category of the network terminal S3.

Upon such service category identifier recognition, the second recognizer RECOG2 provides a control signal to the inserter COMP with this information.

The inserter COMP is enabled to receive such a control signal that comprises a recognized service category identity. The inserter COMP inserts upon reception of such a control signal, in the upstream data an upstream data packet of the associated service category to the recognized service category identity. This upstream data packet is retrieved from the classifier according to the service category identity.

This procedure is executed for each service category identity being comprised in the actual grantset.

The inserter COMP forwards the upstream data to the transmitter TR. The transmitter TR transmits the upstream data to the central station CS in a number n of potential consecutive upstream timeslots, of the one or more timeslots. The predetermined number of m subfields that was predetermined for this downstream grantset by the central station CS determines the number n.

In this particular embodiment it is decided to implement a one to one relation between a service category identity and its received number of upstream timeslots. This means that the content of the data packet being retrieved from on associated service category in the classifier CL is allowed to fill maximum one upstream timeslot.

In this way the number of upstream timeslots (n + 1) is exactly equal to the number of identifiers (network terminal identity and service category identifiers) (m + 1) in the received grantset.

As it is explained above, the downstream signal frame structure of the time division multiple access network comprises a plurality of grantsets G1, G2, G3, ... whereof each grantset e.g. G3 comprises a first field F1 and an optional second field. The first field F1 comprises a network terminal identity e.g. NTi that is associated to a network terminal NTi being allowed to receive upstream bandwidth. This upstream bandwidth is either to transmit only an upstream PLOAM cell with updated management information or either it reflects also additional bandwidth to transmit upstream data packets of one or more of its service categories. This additional upstream bandwidth is allocated to the different service categories by means of the optional second field F2 in the grantset. The second field F2 comprises a predetermined number m of subfields. Each subfield comprises a service category identity e.g. S3 that is associated to one of the service categories S1, S2, S3, ..., Sq of the network terminal NTi that is permitted this additional upstream bandwidth. This predefined number m is determined for each newly downstream-transmitted grantset.

Although that the respective network terminals know where to find in a downstream PLOAM the different grantsets, it is important, due to the variable length of the different grantsets, to recognize the borders between these different grantsets.

In order to recognize a first field in a grantset, or the first and the last subfield in a second field in a grantset, the grantset comprises some predefined values for some predefined bits in the respective fields.

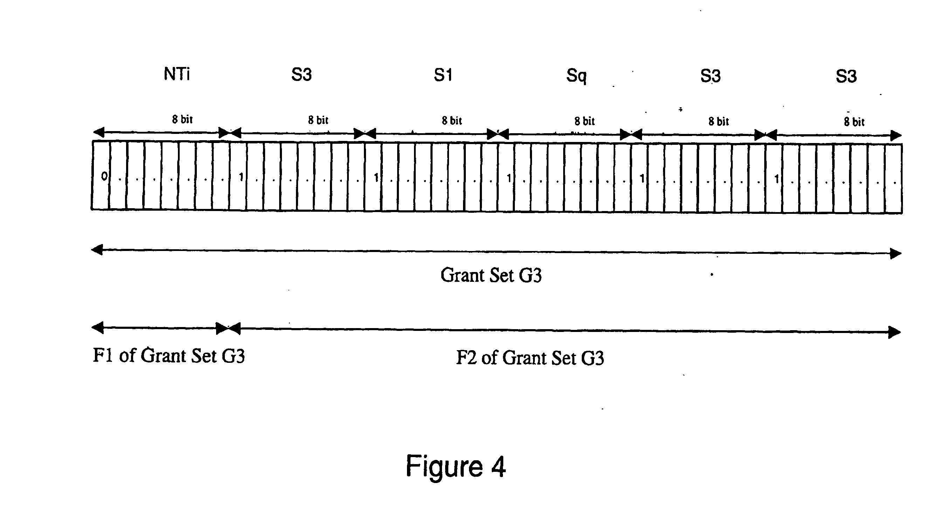

Indeed, in order to recognize the presence of a first field, the value at the place of the first bit of such a potential first field always has the value "0". This is shown in Figure 4. The first recognizer RECOG1 recognizes this value and realizes that a first field is present in the incoming bitstream. Upon such confirmation of a first field F1, the first recognizer RECOG1 starts to read and therewith to eventual recognize its network terminal identity. The presence of the above mentioned "0" in a first field F1 means that the value of the first bit of all network terminals also starts with "0" whereby the word-length of a network terminals counts 8 bits, or it means that the network terminal identities only comprise 7 bits i.e. the 7 bits after the "0" recognition.

In order to recognize the presence of a subfield in a second field of a grantset, the value at the place of the first bit of such a potential subfield always has the value "1". This is shown in figure 4. The second recognizer RECOG2 recognizes this value and realizes that a subfield is present / or still present in the incoming bitstream. Upon such a confirmation of a subfield, the second recognizer RECOG2 starts to read and therewith to recognize the service category identity. The above-mentioned remark of 8 bit word length or 7 bit word length is also valid here.

This preferred embodiment describes 8-bit words for the network terminal identifiers and the service category identifiers.

As long as a "0" is found for the first bit of a new 8-bit word a next subfield is present whereupon a service category identity has to be recognized.

Once a "1" is again found for the first bit of a new 8-bit word, the network terminal NTi knows that a new grantset started.

The number of subfields that was found and was inserted in the previous grantset is hereby determined for the network terminal. This number is equal to m.

Hereafter, a principle working of the timeslot management according to this preferred embodiment of the present invention will be described.

The central station CS of the time division multiple access network generates a downstream PLOAM cell. Presume that, according to the installed dynamic bandwidth allocation of the medium access controller, a number of upstream timeslots is allowed to be used by some service categories of a particular network terminal NTi. Hereby, the central station CS, comprises the network terminal identifier NTi of this network terminal NTi in the first byte of a particular grant set e.g. grant set G3. It has to be remarked that this network terminal identifier starts with "1".

The determiner DET determines herewith the number of subfields for this grantset G3. Presume that this number is m=5 for grantset G3. Also, the service categories that are permitted to use some upstream bandwidth was determined by the DBA. The central-station-inserter COMP-CS inserts service category identifiers in the grantset G3 according to this number m=5 in the same grant set G3. Presume that, according to the present allocation method, three service categories are enabled to some upstream bandwidth. More particular, service category S3 is authorized to use 3 upstream timeslots, service category S1 is authorized to use 1 upstream timeslot and service category Sq is authorized to use 1 upstream timeslot. The respective consecutive upstream timeslots authorized to the network terminal NTi are determined as follow: S3, S1, Sq, S3 and S3.

The central station CS looks up in predefined tables the associated service category identities for S1, Sq and S3 for this network terminal NTi. It has to be remarked here that the respective network terminal with its network terminal identity NTi is indeed required in order to determine the queue identities in a unique way.

In this way S3, S1, Sq, S3 and S3 each including 8 bits and a first "0" bit, are determined and included by the central-station-inserter COMP-CS in the 5 following bytes i.e. the second field F2 of the grant set G3.

The grant set G3 is inserted together with the other grantsets, presume grantset G1 and G2 (see Figure 3), in the PLOAM cell that and is distributed by the distributor DIST into the access network.

Upon reception of the PLOAM cell by the receiver REC of the network terminal NTi, the first recognizer RECOG1, checks the first bit of the predefined place for the different grant sets in the PLOAM cell. At this place, network terminal NTi detects a "0" and tries to recognize its own identity. No recognition is performed. Every 8-bit, NTi checks again the presence of a "0" at the first place of a new word. At the 6-th 8bit-word, again a "0" is detected. However, this word does not comprises the identity of the network terminal NTi. At the next i.e. 7-th word, already again a "0" is detected. Now, the NTi recognizes its own identity. The newly detected grantset i.e. G3 is for network terminal NTi. The inserter COMP is signaled to insert an upstream PLOAM cell in the upstream data being prepared for upstream transmission.

The second recognizer RECOG2 is signaled and starts to recognize a first service category identifier. This is S3 (See Figure 3). The inserter COMP of the network terminal NTi receives a signal that includes this service category identity from the second recognizer RECOG2. It retrieves from the classifier CL the associated data-packet for inclusion in the upstream data. This is also realized respectively for S1, Sq, again S3 and again S3.

In this way the upstream data is prepared and comprises data for 6 upstream timeslots: an upstream PLOAM cell; a data packet of S3; a data packet of S1; a data packet of Sq; a data packet of S3 and again a data packet of S3. This upstream data is forwarded to the transmitter TR that transmits this upstream data in 6 consecutive upstream timeslots.

Although the timeslot management method and central station and network terminal have been described for PON networks, they may as well be used for any network based on time division multiplexing, such as hybrid fiber coax networks, satellite networks and so on.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

## Claims

1. A timeslot management method for use in a time division multiple access network that comprises a central station (CS) coupled to each of a plurality of network terminals (NT1, ..., NTi, ..., NTx) via the cascade connection of a common transmission link (L) and respective individual network terminal links (L1, ..., Li, ...., Lx), said management method comprises the steps of :

   - downstream distributing by said central station (CS) a plurality of downstream grantsets (G1, G2, G3, ...); and
   - receiving by a network terminal (NTi) one (G3) of said plurality of downstream grantsets (G1, G2, G3, ...); and
   - recognizing by said network terminal (NTi) said grantset (G3) as being associated to said network terminal (NTi) by means of a network terminal identity (NTi) being comprised in said grantset (G3); and
   - inserting in upstream data an upstream data packet of each (S3) service category of said network terminal (NTi) for which a service category identity (S3) being recognized in said grantset (G3); and
   - transmitting by said network terminal (NTi) said upstream data towards said central station (CS) in one or more upstream timeslots;

   **characterized in that** said timeslot management method further comprises :

   - predetermining by said central station (CS) for each one of said plurality of downstream grantsets (G1, G2, G3, ...) a number m of subfields of said downstream grantset (G3); and
   - inserting by said central station (CS) in each subfield of said number of subfields of said downstream grantset (G3) a service category identity (S3) being associated to a service category (S3) of said network terminal (NTi), whereby said number m determines a number n of potential consecutive upstream timeslots, of said one or more timeslots, for transmission by said network terminal (NTi) of an upstream data packet of one (S3) of its service categories (S1, S2, S3, ..., Sq).

2. The timeslot management method of claim 1, **characterized in that**

   - said step of recognizing said grantset (G3) as being associated to said network terminal (NTi) comprises recognizing for at least one first predefined bit of said grantset (G3) a first predefined value whereby a first field (F1) being recognized in said grantset (G3) and therewith said network terminal identity (NTi) being identified, said first field of said grantset (G3) being used by said central station (CS) for inserting one of a plurality of network terminal identities (NT1, ..., NTi, ..., NTx); and that
   - said recognition of a service category identity (S1, S2, S3, ..., Sq) in said downstream grantset (G3) comprises recognizing for at least one second predefined bit of said grantset (G3) a second predefined value whereby one of said number of subfields of a second field (F2) being determined in said grantset (G3) and therewith said service category identity (S3) being identified.

3. The timeslot management method according to any one of claim 1 and claim 2, **characterized in that** said method further comprises a step of upon recognition of its network terminal identity (NTi) in said grantset by said network terminal (NTi) transmitting to said central station (CS), in a first predetermined upstream timeslot, of said one or more timeslots, management information such as any one of upstream physical layer operation and maintenance information, dynamic bandwidth allocation information and synchronization information.

4. The timeslot management method according to claim 3, **characterized in that** said number m is equal to zero whereby said one or more upstream timeslots is only one upstream timeslot which is used for upstream transmission of said management information.

5. The timeslot management method according to any one of claim 1 to 4, **characterized in that** said network terminal identifiers (NT1, ..., NTi, ..., NTx) and said service category identities (S1, S2, S3, ..., Sq) are defined with a same predefined wordlength.

6. A downstream signal frame structure for use in a time division multiple access network that comprises a central station (CS) coupled to each of a plurality of network terminals (NT1, ..., NTi, ..., NTx) via the cascade connection of a common transmission link (L) and respective individual network terminal links (L1, ..., Li, ...., Lx), said downstream signal frame structure being distributed from said central station (CS) to said plurality of network terminals (NT1, ..., NTi, ..., NTx) and comprises a plurality of grantsets (G1, G2, G3, ...) whereof each grantset (G3), comprises a first field (F1) for inserting a network terminal identity (NTi) being associated to a network terminal (NTi), **characterized in that** each grantset (G3) comprises a second field (F2) that comprises a predefined number m of subfields, each subfield comprises a service category identity (S3) being associated to one of a plurality of service categories (S1, S2, S3, ..., Sq) of said network terminal (NTi), and that said predefined number m being determined for each one of said plurality of downstream grantsets (G1, G2, G3, ...), and whereby said predefined number m determines a number n of potential consecutive upstream timeslots which are actually allocated via said grantset (G3) to said network terminal (NTi) for transmission of an upstream data packet of one of its service categories (S3, S1, Sq, S3, S3) of said network terminal (NTi) whose service category identity being comprised in said grantset (G3).

7. The downstream signal frame structure of claim 6, **characterized in that** said grantset (G3) comprises at least one first predefined bit having a first predefined value, in order to determine said first field (F1) in said grantset (G3) and to identify therewith said network terminal identity (NTi); and that said grantset (G3) comprises at least one second predefined bit having a second predefined value for each one of said number m of subfields, in order to determine a subfield in said second field (F2) and to identify therewith said service category identity (S3).

8. A network terminal (NTi) for use in a time division multiple access network that comprises a central station (CS) which is coupled to each of a plurality of network terminals (NT1, .., NTi, ..., NTx), comprising said network terminal (NTi), via the cascade connection of a common transmission link (L) and respective individual network terminals links (L1, ..., Li, ..., Lx), said network terminal (NTi) comprises :

   - a receiver (REC) to receive one (G3) of a plurality of downstream grontsets (G1, G2, G3, ...) being downstream distributed by said central station (CS); and
   - a first recognizer (RECOG1) coupled to said receiver (REC) to recognize said grantset (G3) as being associated to said network terminal (NTi) according to a network terminal identity (NTi) being comprised in said grantset (G3); and

- a second recognizer (RECOG2) at least coupled to any one of said receiver (REC) and said first recognizer (RECOG1) to recognize in said grantset (G3) a service category identity (S3) being associated to a service category of said network terminal (NTi); and

- an inserting means (COMP) coupled to said second recognizer (RECOG2) to insert in upstream data an upstream data packet of each (S3) service category of said network terminal (NTi) for which a service category identity (S3) is recognized in said grantset (G3); and

- a transmitter (TR) coupled to said inserting means (COMP) to transmit said upstream data towards said central station (CS) in one or more upstream timeslots; **characterized in that** said transmitter (TR) is further adapted to transmit said upstream data in a number n of potential consecutive upstream timeslots, of said one or more timeslots, said number n being determined by a predetermined number of subfields of said downstream grantset (G3), such number m of subfields being predetermined by said central station (CS) for each one of said plurality of downstream grantsets (G1, G2, G3, ...) in order to insert by said central station (CS) in each subfield of such number of subfields of said downstream grantset (G3) a service category identity (S3) being associated to a service category (S3) of said network terminal (NTi).

9. A central station (CS) for use in a time division multiple access network being coupled to each of a plurality of network terminals (NT1, ..., NTi, ..., NTx) via the cascade connection of a common transmission link (L) and respective individual network terminal links (L1, ..., Li, ...., Lx), said central station (CS) comprises a distributor (DIST) for downstream distributing a plurality of downstream grantsets (G1, G2, G3, ...) in order to be received by one (NTi) of said plurality of network terminals (NT1, ..., NTi, .., NTx) and to enable thereby, in the event of reception by said network terminal (NTi) of one (G3) of said plurality of downstream grantsets (G1, G2, G3, ...), and in the event of recognition by said network terminal (NTi) as being associated to said network terminal (NTi) by means of a network terminal identity (NTi) being comprised in said grantset (G3), to insert by said network terminal (NTi) in upstream data an upstream data packet of each (S3) service category of said network terminal (NTi) for which a service category identity (S3) being recognized in said grantset (G3); and to enable thereby to transmit by said network terminal (NTi) said upstream data towards said central station (CS) in one or more upstream timeslots; **characterized in that** said central station further comprises

- a determining means (DET) coupled via a central station inserting means (COMP-CS) to said distributor (DIST), to predetermine for each one of said plurality of downstream grantsets (G1, G2, G3, ...) a number m of subfields and thereby providing a number for said grantset (G3); and

- a central station inserting means (COMP_CS) coupled between said determining means (DET) and said distributor (DIST), to insert in each subfield of said number of subfields of said downstream grantset (G3) a service category identity (S3) being associated to a service category (S3) of said network terminal (NTi), whereby said number m determines a number n of potential consecutive upstream timeslots, of said one or more timeslots, for transmission by said network terminal (NTi) of an upstream data packet of one (S3) of its service categories (S1, S2, S3, ..., Sq).

**Patentansprüche**

1. Ein Zeitschlitzverwaltungsverfahren zur Verwendung in einem Zeitmultiplexnetz mit Vielfachzugriff, das eine Zentralstation (CS) enthält, die mit jedem aus einer Vielzahl von Netzwerk-Endgeräten (NT1, ..., NTi, ..., NTx) über die Reihenschaltung einer gemeinsamen Übertragungsverbindung (L) und entsprechender einzelner Netzwerk-Endgeräte-Verbindungen (L1, ..., Li, ..., Lx) verbunden ist, wobei das Verwaltungsverfahren folgende Schritte umfasst:

- Abwärtsrichtungs-Verteilung einer Vielzahl von Abwärtsrichtungs-Genehmigungs-Sätzen (G1, G2, G3, ...) durch die Zentralstation (CS); und

- Empfang eines (G3) aus der Vielzahl der Abwärtsrichtungs-Genehmigungs-Sätze (G1, G2, G3, ...) durch ein Netzwerk-Endgerät (NTi); und

- Erkennung durch das Netzwerk-Endgerät (NTi), dass der Genehmigungs-Satz (G3) dem Netzwerk-Endgerät (NTi) zugeordnet ist, mittels einer Netzwerk-Endgeräte-Kennung (NTi), die in dem Genehmigungs-Satz (G3) enthalten ist; und

- Einfügung eines Aufwärtsrichtungs-Datenpaketes jeder (S3) Dienstkategorie des Netzwerk-Endgerätes (NTi), für die eine Dienstkategorie-Kennung (S3) in dem Genehmigungs-Satz (G3) erkannt wird, in die Aufwärtsrichtungs-Daten; und

- Senden der Aufwärtsrichtungs-Daten durch das Netzwerk-Endgerät (NTi) zur Zentralstation (CS) in einem oder mehreren Aufwärtsrichtungs-Zeitschlitzen; **dadurch gekennzeichnet, dass** das Zeitschlitzverwaltungsverfahren weiterhin folgendes umfasst:

- Vorherbestimmung für jeden aus der Vielzahl der Genehmigungs-Sätze (G1, G2, G3, ...) einer Anzahl m von Unter-Feldern des Abwärtsrichtungs-Genehmigungs-Satzes (G3) durch die Zentralstation (CS); und

Einfügung einer Dienstkategorie-Kennung (S3), die einer Dienstkategorie (S3) des Netzwerk-Endgerätes (NTi) zugeordnet ist, in jedes Unter-Feld aus der Vielzahl von Unter-Feldern des Abwärtsrichtungs-Genehmigungs-Satzes durch die Zentralstation (CS), wobei die Anzahl m eine Anzahl n möglicher aufeinander folgender Aufwärtsrichtungs-Zeitschlitze des einen oder der mehreren Zeitschlitze zur Übertragung durch das Netzwerk-Endgerät (NTi) eines Aufwärtsrichtungs-Datenpaketes einer (S3) seiner Dienstkategorien (S1, S2, S3, ..., Sq) bestimmt.

2. Das Zeitschlitzverwaltungsverfahren aus Anspruch 1, **dadurch gekennzeichnet, dass**

- der Schritt der Erkennung des Genehmigungs-Satzes (G3) als dem Netzwerk-Endgerät (NTi) zugeordnet es umfasst, für mindestens ein erstes vordefiniertes Bit des Genehmigungs-Satzes (G3) einen ersten vordefinierten Wert zu erkennen, wobei ein erstes Feld (F1) in dem Genehmigungs-Satz (G3) erkannt wird und dadurch die Netzwerk-Endgeräte-Kennung (NTi) erkannt wird, wobei das erste Feld des Genehmigungs-Satzes (G3) von der Zentralstation (CS) benutzt wird, eine aus einer Vielzahl von Netzwerk-Endgeräte-Kennungen (NT1, ..., NTi, ..., NTx) einzufügen; und dass

- die Erkennung einer Dienstkategorie-Kennung (S1, S2, S3, ..., Sq) in dem Abwärtsrichtungs-Genehmigungs-Satz (G3) es umfasst, für mindestens ein zweites vordefiniertes Bit des Genehmigungs-Satzes (G3) einen zweiten vordefinierten Wert zu erkennen, wodurch eines der Anzahl von Unter-Feldern eines zweiten Feldes (F2) in dem Genehmigungs-Satz (G3) bestimmt wird und dadurch die Dienstkategorie-Kennung (S3) erkannt wird.

3. Das Zeitschlitzverwaltungsverfahren gemäß einem beliebigen der Ansprüche 1 und 2, **dadurch gekennzeichnet, dass** das Verfahren weiterhin einen Schritt umfasst, bei Erkennung seiner Netzwerk-Endgeräte-Kennung (NTi) in dem Genehmigungs-Satz durch das Netzwerk-Endgerät (NTi) in einem ersten vordefinierten Aufwärtsrichtungs-Zeitschlitz des einen oder der mehreren Zeitschlitze zur Zentralstation (CS) Verwaltungsinformationen zu übertragen, wie z.B. eine der Betriebs- und Wartungs-Informationen der physikalischen Aufwärtsrichtungs-Ebene, Informationen zur dynamischen Bandbreitenvergabe und Synchronisations-Information.

4. Das Zeitschlitzverwaltungsverfahren gemäß Anspruch 3, **dadurch gekennzeichnet, dass** die Anzahl m gleich Null ist, wodurch der eine oder die mehreren Aufwärtsrichtungs-Zeitschlitze nur ein Aufwärtsrichtungs-Zeitschlitz ist, der zur Aufwärtsrichtungs-Übertragung der Verwaltungsinformation verwendet wird.

5. Das Zeitschlitzverwaltungsverfahren gemäß einem beliebigen der Ansprüche 1 bis 4, **dadurch gekennzeichnet, dass** die Netzwerk-Endgeräte-Kennungen (NT1, ..., NTi, ..., NTx) und die Dienstkategorie-Kennungen (S1, S2, S3, ..., Sq) mit derselben vordefinierten Wortlänge definiert werden.

6. Eine Abwärtsrahmenstruktur zur Verwendung in einem Zeitmultiplexnetz mit Vielfachzugriff, das eine Zentralstation (CS) enthält, die mit jedem aus einer Vielzahl von Netzwerk-Endgeräten (NT1, ..., NTi, ..., NTx) über die Reihenschaltung einer gemeinsamen Übertragungsverbindung (L) und entsprechender einzelner Netzwerk-Endgeräte-Verbindungen (L1, ..., Li, ..., Lx) verbunden ist, wobei die Abwärtsrahmenstruktur von der Zentralstation (CS) an die Vielzahl von Netzwerk-Endgeräten (NT1, ..., NTi, ..., NTx) verteilt wird und eine Vielzahl von Genehmigungs-Sätzen (G1, G2, G3, ...) enthält, von denen jeder Genehmigungs-Satz (G3) ein erstes Feld (F1) zur Einfügung einer Netzwerk-Endgeräte-Kennung (NTi), die einem Netzwerk-Endgerät (NTi) zugeordnet ist, enthält, **dadurch gekennzeichnet, dass** jeder Genehmigungs-Satz (G3) ein zweites Feld (F2) enthält, das eine vordefinierte Anzahl m von Unter-Feldern enthält, wobei jedes Unter-Feld eine Dienstkategorie-Kennung (S3) enthält, die einer aus einer Vielzahl von Dienstkategorien (S1, S2, S3, ..., Sq) des Netzwerk-Endgerätes (NTi) zugeordnet ist, und dadurch, dass die vordefinierte Anzahl m für jeden aus der Vielzahl von Abwärtsrichtungs-Genehmigungs-Sätzen (G1, G2, G3, ...) bestimmt wird, und wobei die vordefinierte Anzahl m eine Anzahl n möglicher aufeinander folgender Aufwärtsrichtungs-Zeitschlitze bestimmt, die über den Genehmigungs-Satz (G3) aktuell dem Netzwerk-Endgerät (NTi) zugeordnet sind, ein Aufwärtsrichtungs-Datenpaket einer seiner Dienstkategorien (S3, S1, Sq, S3, S3) des Netzwerk-Endgerätes (NTi), dessen Dienstkategorie-Kennung in dem Genehmigungs-Satz (G3) enthalten ist, zu senden.

7. Die Abwärtsrahmenstruktur aus Anspruch 6, **dadurch gekennzeichnet, dass** der Genehmigungs-Satz (G3) mindestens ein erstes vordefiniertes Bit enthält, das einen ersten vordefinierten Wert hat, um das erste Feld (F1) in dem Genehmigungs-Satz (G3) zu bestimmen und dadurch die Netzwerk-Endgeräte-Kennung (NTi) zu erkennen; und dadurch, dass der Genehmigungs-Satz (G3) mindestens ein zweites vordefiniertes Bit enthält, das für jedes der Anzahl m von Unter-Feldern einen zweiten vordefinierten Wert hat, um ein Unter-Feld in dem zweiten Feld (F2) zu bestimmen und dadurch die Dienstkategorie-Kennung (S3) zu erkennen.

8. Ein Netzwerk-Endgerät (NTi) zur Verwendung in einem Zeitmultiplexnetz mit Vielfachzugriff, das eine Zentralstation (CS) enthält, die mit jedem aus einer Vielzahl von Netzwerk-Endgeräten (NT1, ..., NTi, ..., NTx), die das Netzwerk-Endgerät (NTi) enthält, über die Reihenschaltung einer gemeinsamen Übertragungsverbindung (L) und entsprechender einzelner Netzwerk-Endgeräte-Verbindungen (L1, ..., Li, ..., Lx) verbunden ist, wobei das Netzwerk-Endgerät (NTi) folgendes enthält:

    - Einen Empfänger (REC) zum Empfang eines (G3) aus einer Vielzahl von Abwärtsrichtungs-Genehmigungs-Sätzen (G1, G2, G3, ...), der in Abwärtsrichtung von der Zentralstation (CS) verteilt wird; und
    - Einen ersten Erkenner (RECOG1), der mit dem Empfänger (REC) gekoppelt ist, um entsprechend einer Netzwerk-Endgeräte-Kennung (NTi), die in dem Genehmigungs-Satz (G3) enthalten ist, den Genehmigungs-Satz (G3) als zu dem Netzwerk-Endgerät (NTi) zugehörig zu erkennen; und
    - Einen zweiten Erkenner (RECOG2), der mindestens mit einem von Empfänger (REC) und erstem Erkenner (RECOG1) gekoppelt ist, um in dem Genehmigungs-Satz (G3) eine Dienstkategorie-Kennung (S3) zu erkennen, die einer Dienstkategorie des Netzwerk-Endgerätes (NTi) zuordnet ist; und
    - Ein Einfügungs-Mittel (COMP), das mit dem zweiten Erkenner (RECOG2) gekoppelt ist, um in Aufwärtsrichtungs-Daten ein Aufwärtsrichtungs-Datenpaket jeder (S3) Dienstkategorie des Netzwerk-Endgerätes (NTi), für die eine Dienstkategorie-Kennung (S3) in dem Genehmigungs-Satz (G3) erkannt wird, einzufügen; und
    - Einen Sender (TR), der mit dem Einfügungs-Mittel (COMP) gekoppelt ist, um die Aufwärtsrichtungs-Daten in einem oder mehreren Aufwärtsrichtungs-Zeitschlitzen zur Zentralstation (CS) zu senden, **dadurch gekennzeichnet, dass** der Sender (TR) weiterhin so angepasst ist, dass er Aufwärtsrichtungs-Daten in einer Anzahl n möglicher aufeinander folgender Aufwärtsrichtungs-Zeitschlitze des einen oder der mehreren Zeitschlitze sendet, wobei die Anzahl n durch eine vordefinierte Anzahl von Unter-Feldern des Abwärtsrichtungs-Genehmigungs-Satzes (G3) bestimmt ist, und diese Anzahl m von Unter-Feldern von der Zentralstation (CS) für jeden aus der Vielzahl der Abwärtsrichtungs-Genehmigungs-Sätze (G1, G2, G3, ...) vordefiniert wird, um durch die Zentralstation (CS) in jedes Unter-Feld der Anzahl von Unter-Feldern des Abwärtsrichtungs-Genehmigungs-Satzes (G3) eine Dienstkategorie-Kennung (S3) einzufügen, die einer Dienstkategorie (S3) des Netzwerk-Endgerätes (NTi) zugeordnet ist.

9. Eine Zentralstation (CS) zur Verwendung in einem Zeitmultiplexnetz mit Vielfachzugriff, die mit jedem aus einer Vielzahl von Netzwerk-Endgeräten (NT1, ..., NTi, ..., NTx) über die Reihenschaltung einer gemeinsamen Übertragungsverbindung (L) und entsprechender einzelner Netzwerk-Endgeräte-Verbindungen (L1, ..., Li, ..., Lx) verbunden ist, wobei die Zentralstation (CS) einen Verteiler (DIST) zur Verteilung einer Vielzahl von Abwärtsrichtungs-Genehmigungs-Sätzen (G1, G2, G3, ...) in Abwärtsrichtung enthält, damit sie von einem (NTi) aus der Vielzahl der Netzwerk-Endgeräte (NT1, ..., NTi, ..., NTx) empfangen werden und es dadurch ermöglichen, für den Fall, dass von dem Netzwerk-Endgerät (NTi) einer (G3) aus der Vielzahl der Abwärtsrichtungs-Genehmigungs-Sätze (G1, G2, G3, ...) empfangen wird, und für den Fall, dass er mittels der in dem Genehmigungs-Satz (G3) enthaltenen Netzwerk-Endgeräte-Kennung (NTi) als dem Netzwerk-Endgerät (NTi) zugeordnet erkannt wird, durch das Netzwerk-Endgerät (NTi) in Aufwärtsrichtungs-Daten ein Aufwärtsrichtungs-Datenpaket jeder (S3) Dienstkategorie des Netzwerk-Endgerätes (NTi), für die in dem Genehmigungs-Satz (G3) eine Dienstkategorie-Kennung (S3) erkannt wird, einzufügen; und es dadurch zu ermöglichen, dass das Netzwerk-Endgerät (NTi) die Aufwärtsrichtungs-Daten in einem oder mehreren Aufwärtsrichtungs-Zeitschlitzen zur Zentralstation (CS) sendet; **dadurch gekennzeichnet, dass** die Zentralstation weiterhin folgendes enthält:

    - Ein Bestimmungs-Mittel (DET), das über ein Zentralstations-Einfügungs-Mittel (COMP-CS) mit dem Verteiler (DIST) gekoppelt ist, um für jeden aus der Vielzahl der Abwärtsrichtungs-Genehmigungs-Sätze (G1, G2, G3, ...) eine Anzahl m von Unter-Feldern vorauszubestimmen und dadurch eine Anzahl für den Genehmigungs-Satz (G3) zu liefern; und
    - Ein Zentralstations-Einfügungs-Mittel (COMP-CS), das zwischen dem Bestimmungs-Mittel (DET) und dem Verteiler (DIST) angeschlossen ist, um in jedes Unter-Feld aus der Anzahl von Unter-Feldern des Abwärtsrichtungs-Genehmigungs-Satzes (G3) eine Dienstkategorie-Kennung (S3) einzufügen, die einer Dienstkategorie (S3) des Netzwerk-Endgerätes (NTi) zugeordnet ist, wobei die Anzahl m eine Anzahl n von möglichen aufeinander folgenden Aufwärtsrichtungs-Zeitschlitzen des einen oder der mehreren Zeitschlitze zur Übertragung eines Aufwärtsrichtungs-Datenpaketes einer (S3) seiner Dienstkategorien (S1, S2, S3, ..., Sq) durch das Netzwerk-Endgerät (NTi) bestimmt.

**Revendications**

1. Procédé de gestion de tranches de temps à utiliser dans un réseau à accès multiple par division dans le temps qui comprend une station centrale (CS) couplée à chacun d'une pluralité de terminaux de réseau (NT1, ..., NTi, ..., NTx) par l'intermédiaire de la connexion en cascade d'une liaison de transmission commune (L) et de liaisons de terminal de réseau individuel respectives (L1, ..., Li, ..., Lx), ledit procédé de gestion comprenant les étapes consistant à :

   - distribuer en aval, par ladite station centrale (CS), une pluralité d'ensembles d'autorisation aval (G1, G2, G3, ...) ; et
   - recevoir par un terminal de réseau (NTi) l'un (G3) de ladite pluralité d'ensembles d'autorisation aval (G1, G2, G3, ...) ; et
   - reconnaître par ledit terminal de réseau (NTi) ledit ensemble d'autorisation (G3) comme étant associé audit terminal de réseau (NTi) au moyen d'une identité de terminal de réseau (NTi) comprise dans ledit ensemble d'autorisation (G3) ; et
   - insérer dans des données amont un paquet de données amont de chaque catégorie de service (S3) dudit terminal de réseau (NTi) pour lequel une identité de catégorie de service (53) est reconnue dans ledit ensemble d'autorisation (G3) ; et
   - transmettre par ledit terminal de réseau (NTi) lesdites données amont vers ladite station centrale (CS) dans une ou plusieurs tranches de temps ;

   **caractérisé en ce que** ledit procédé de gestion de tranches de temps comprend en outre les étapes consistant à :

   - prédéterminer par ladite station centrale (CS) pour chacun de ladite pluralité d'ensembles d'autorisation aval (G1, G2, G3, ...) un certain nombre m de sous-champs dudit ensemble d'autorisation aval (G3) ; et
   - insérer par ladite station centrale (CS) dans chaque sous-champ dudit nombre de sous-champs dudit ensemble d'autorisation aval (G3) une identité de catégorie de service (S3) associée à une catégorie de service (S3) dudit terminal de réseau (NTi), de manière à ce que ledit nombre m détermine un nombre n de tranches de temps amont consécutives potentielles, d'une ou de plusieurs tranches de temps, pour la transmission par ledit terminal de réseau (NTi) d'un paquet de données amont d'une (S3) de ses catégories de service (S1, S2, S3, ..., Sq).

2. Procédé de gestion de tranches de temps selon la revendication 1, **caractérisé en ce que**

   - ladite étape consistant à reconnaître ledit ensemble d'autorisation (G3) comme étant associé audit terminal de réseau (NTi) comprend la reconnaissance d'une première valeur prédéfinie pour au moins un premier bit prédéfini dudit ensemble d'autorisation (G3), de manière à ce qu'un premier champ (F1) soit reconnu dans ledit ensemble d'autorisation (G3) et avec celui-ci ladite identité de terminal de réseau (NTi) soit identifiée, ledit premier champ dudit ensemble d'autorisation (G3) étant utilisé par ladite station centrale (CS) pour insérer l'une d'une pluralité d'identités de terminal de réseau (NT1, ..., NTi, ..., NTx); et **en ce que**
   - ladite reconnaissance d'une identité de catégorie de service (S1, S2, S3, ..., Sq) dans ledit ensemble d'autorisation aval (G3) comprend la reconnaissance d'une deuxième valeur prédéfinie pour au moins un deuxième bit prédéfini dudit ensemble d'autorisation (G3), de manière à ce que l'un dudit nombre de sous-champs d'un deuxième champ (F2) soit déterminé dans ledit ensemble d'autorisation (G3) et avec celui-ci ladite identité de catégorie de service (S3) soit identifiée.

3. Procédé de gestion de tranches de temps selon l'une quelconque des revendications 1 et 2, **caractérisé en ce que** ledit procédé comprend en outre une étape consistant à, après la reconnaissance de son identité de terminal de réseau (NTi) dans ledit ensemble d'autorisation par ledit terminal de réseau (NTi), transmettre à ladite station centrale (CS), dans une première tranche de temps amont prédéterminée, desdites une ou plusieurs tranches de temps, des informations de gestion, comme l'une quelconque des informations d'exploitation et de maintenance de couche physique amont, des informations d'allocation dynamique de largeur de bande et des informations de synchronisation.

4. Procédé de gestion de tranches de temps selon la revendication 3, **caractérisé en ce que** ledit nombre m est égal à zéro, de manière à ce que lesdites une ou plusieurs tranches de temps amont ne correspondent qu'à une seule tranche de temps amont qui est utilisée pour la transmission amont desdites informations de gestion.

5. Procédé de gestion de tranches de temps selon l'une quelconque des revendications 1 à 4, **caractérisé en ce que** lesdits identificateurs de terminal de réseau (NT1, ..., NTi, ..., NTx) et lesdites identités de catégorie de service (S1, S2, S3, ..., Sq) sont définies par une même longueur de mot prédéfinie.

6. Structure de trame de signal aval à utiliser dans un réseau à accès multiple par division dans le temps qui comprend une station centrale (CS) couplée à chacun d'une pluralité de terminaux de réseau (NT1, ..., NTi, ..., NTx) par l'intermédiaire de la connexion en cascade d'une liaison de transmission commune (L) et de liaisons de terminal de réseau individuel respectives (L1, ..., Li, ..., Lx), ladite structure de trame de signal aval étant distribuée de ladite station centrale (CS) à ladite pluralité de terminaux de réseau (NT1, ..., NTi, ..., NTx) et comprend une pluralité d'ensembles d'autorisation (G1, G2, G3, ...) dont chaque ensemble d'autorisation (G3) comprend un premier champ (F1) pour insérer une identité de terminal de réseau (NTi) associée à un terminal de réseau (NTi), **caractérisé en ce que** chaque ensemble d'autorisation (G3) comprend un deuxième champ (F2) qui comprend un nombre prédéfini m de sous-champs, chaque sous-champ comprend une identité de catégorie de service (S3) associée à l'une d'une pluralité de catégories de service (S1, S2, S3, ..., Sq) dudit terminal de réseau (NTi), et **en ce que** ledit nombre m prédéfini est déterminé pour chacun de ladite pluralité d'ensembles d'autorisation aval (G1, G2, G3, ...), et de manière à ce que ledit nombre m prédéfini détermine un nombre n de tranches de temps amont consécutives potentielles qui sont effectivement allouées par l'intermédiaire dudit ensemble d'autorisation (G3) audit terminal de réseau (NTi) pour la transmission d'un paquet de données amont d'une de ses catégories de service (S3, S1, Sq, S3, S3) dudit terminal de réseau (NTi) dont l'identité de catégorie de service est comprise dans ledit ensemble d'autorisation (G3).

7. Structure de trame de signal aval selon la revendication 6, **caractérisée en ce que** ledit ensemble d'autorisation (G3) comprend au moins un premier bit prédéfini ayant une première valeur prédéfinie, de façon à déterminer ledit premier champ (F1) dans ledit ensemble d'autorisation (G3) et identifier par celui-ci ladite identité de terminal de réseau (NTi) ; et **en ce que** ledit ensemble d'autorisation (G3) comprend au moins un deuxième bit prédéfini ayant une deuxième valeur prédéfinie pour chacun dudit nombre m de sous-champs, de façon à déterminer un sous-champ dans ledit deuxième champ (F2) et identifier par celui-ci ladite identité de catégorie de service (S3).

8. Terminal de réseau (NTi) à utiliser dans un réseau à accès multiple par division dans le temps qui comprend une station centrale (CS) qui est couplée à chacun d'une pluralité de terminaux de réseau (NT1, ..., NTi, ..., NTx), comprenant ledit terminal de réseau (NTi), par l'intermédiaire de la connexion en cascade d'une liaison de transmission commune (L) et des liaisons de terminal de réseau individuel respectives (L1, ..., Li, ..., Lx), ledit terminal de réseau (NTi) comprenant :

   - un récepteur (REC) pour recevoir l'un (G3) d'une pluralité d'ensembles d'autorisation aval (G1, G2, G3, ...) distribués en aval par ladite station centrale (CS) ; et
   - un premier dispositif de reconnaissance (RECOG1) couplé audit récepteur (REC) pour reconnaître ledit ensemble d'autorisation (G3) comme étant associé audit terminal de réseau (NTi) selon une identité de terminal de réseau (NTi) comprise dans ledit ensemble d'autorisation (G3) ; et
   - un deuxième dispositif de reconnaissance (RECOG2) au moins couplé à l'un quelconque dudit récepteur (REC) et dudit premier dispositif de reconnaissance (RECOG1) pour reconnaître dans ledit ensemble d'autorisation (G3) une identité de catégorie de service (S3) associée à une catégorie de service dudit terminal de réseau (NTi) ; et
   - des moyens d'insertion (COMP) couplés audit deuxième dispositif de reconnaissance (RECOG2) pour insérer dans des données amont un paquet de données amont de chaque (S3) catégorie de service dudit terminal de réseau (NTi) pour lequel une identité de catégorie de service (S3) est reconnue dans ledit ensemble d'autorisation (G3) ; et
   - un émetteur (TR) couplé auxdits moyens d'insertion (COMP) pour transmettre lesdites données amont vers ladite station centrale (CS) dans une ou plusieurs tranches de temps amont ; **caractérisé en ce que** ledit émetteur (TR) est en outre adapté pour transmettre lesdites données amont dans un nombre n de tranches de temps amont consécutives potentielles, desdites une ou plusieurs tranches de temps, ledit nombre n étant déterminé par un nombre prédéterminé de sous-champs dudit ensemble d'autorisation aval (G3), ce nombre m de sous-champs étant prédéterminé par ladite station centrale (CS) pour chacun de ladite pluralité d'ensembles d'autorisation aval (G1, G2, G3, ...) de façon à insérer par ladite station centrale (CS) dans chaque sous-champ de ce nombre de sous-champs dudit ensemble d'autorisation aval (G3) une identité de catégorie de service (S3) associée à une catégorie de service (S3) dudit terminal de réseau (NTi).

**9.** Station centrale (CS) à utiliser dans un réseau à accès multiple par division dans le temps, couplée à chacun d'une pluralité de terminaux de réseau (NT1, ..., NTi, ..., NTx) par l'intermédiaire de la connexion en cascade d'une liaison de transmission commune (L) et de liaisons de terminal de réseau individuel respectives (L1, ..., Li, ..., Lx), ladite station centrale (CS) comprenant un distributeur (DIST) pour distribuer en aval une pluralité d'ensembles d'autorisation aval (G1, G2, G3, ...) afin d'être reçus par l'un (NTi) de ladite pluralité de terminaux de réseau (NT1, ..., NTi, ..., NTx) et permettre ainsi, dans le cas d'une réception par ledit terminal de réseau (NTi) d'un (G3) de ladite pluralité d'ensembles d'autorisation aval (G1, G2, G3, ...), et dans le cas de la reconnaissance par ledit terminal de réseau (NTi) comme étant associé audit terminal de réseau (NTi) au moyen d'une identité de terminal de réseau (NTi) comprise dans ledit ensemble d'autorisation (G3), l'insertion par ledit terminal de réseau (NTi) dans des données amont d'un paquet de données amont de chaque (S3) catégorie de service dudit terminal de réseau (NTi) pour lequel une identité de catégorie de service (S3) est reconnue dans ledit ensemble d'autorisation (G3) ; et permettre ainsi la transmission par ledit terminal de réseau (NTi) desdites données amont vers ladite station centrale (CS) dans une ou plusieurs tranches de temps amont ; **caractérisée en ce que** ladite station centrale comprend en outre :

- des moyens de détermination (DET) couplés audit distributeur (DIST) par l'intermédiaire de moyens d'insertion de station centrale (COMP-CS), pour prédéterminer pour chacun de ladite pluralité d'ensembles d'autorisation aval (G1, G2, G3, ...) un nombre m de sous-champs et fournir ainsi un nombre pour ledit ensemble d'autorisation (G3) ; et
- des moyens d'insertion de station centrale (COMP-CS) couplés entre lesdites moyens de détermination (DET) et ledit distributeur (DIST), pour insérer dans chaque sous-champ dudit nombre de sous-champs dudit ensemble d'autorisation aval (G3) une identité de catégorie de service (S3) associée à une catégorie de service (S3) dudit terminal de réseau (NTi), de manière à ce que ledit nombre m détermine un nombre n de tranches de temps amont consécutives potentielles, desdites une ou plusieurs tranches de temps, pour la transmission par ledit terminal de réseau (NTi) d'un paquet de données amont d'une (S3) de ses catégories de service (S1, S2, S3, ..., Sq).

Figure 1

**Figure 2 : prior art**

| G.983.GTC DS PLOAM cell | |
|---|---|
| H1 | GRANT SET 5 |
| H2 | GRANT SET 5 |
| H3 | GRANT SET 6 |
| H4 | GRANT SET 6 |
| HEC | GRANT SET 6 |
| IDENT | GRANT SET 6 |
| SYNC1 | CRC |
| SYNC2 | GRANT SET 7 |
| GRANT SET 1 | GRANT SET 7 |
| GRANT SET 1 | GRANT SET 7 |
| GRANT SET 1 | GRANT SET 7 |
| GRANT SET 1 | CRC |
| GRANT SET 2 | M_PON_ID |
| GRANT SET 2 | M_ID |
| GRANT SET 2 | M_FIELD 1 |
| GRANT SET 2 | M_FIELD 2 |
| GRANT SET 3 | M_FIELD 3 |
| GRANT SET 3 | M_FIELD 4 |
| GRANT SET 3 | M_FIELD 5 |
| GRANT SET 3 | M_FIELD 6 |
| CRC | M_FIELD 7 |
| GRANT SET 4 | M_FIELD 8 |
| GRANT SET 4 | M_FIELD 9 |
| GRANT SET 4 | M_FIELD 10 |
| GRANT SET 4 | CRC |
| GRANT SET 5 | BIP |
| GRANT SET 5 | |

4 bytes

**Figure 3**

| G.983.GTC DS PLOAM cell | |
|---|---|
| H1 | GRANT SET 5 |
| H2 | GRANT SET 5 |
| H3 | GRANT SET 5 |
| H4 | GRANT SET 6 |
| HEC | GRANT SET 6 |
| IDENT | GRANT SET 7 |
| SYNC1 | CRC |
| SYNC2 | GRANT SET 7 |
| GRANT SET 1 | GRANT SET 7 |
| GRANT SET 1 | GRANT SET 7 |
| GRANT SET 1 | GRANT SET 7 |
| GRANT SET 1 | CRC |
| GRANT SET 1 | M_PON_ID |
| GRANT SET 2 | M_ID |
| GRANT SET 3 (NTi) | M_FIELD 1 |
| GRANT SET 3 (S3) | M_FIELD 2 |
| GRANT SET 3 (S1) | M_FIELD 3 |
| GRANT SET 3 (Sq) | M_FIELD 4 |
| GRANT SET 3 (S3) | M_FIELD 5 |
| GRANT SET 3 (S3) | M_FIELD 6 |
| CRC | M_FIELD 7 |
| GRANT SET 4 | M_FIELD 8 |
| GRANT SET 4 | M_FIELD 9 |
| GRANT SET 5 | M_FIELD 10 |
| GRANT SET 5 | CRC |
| GRANT SET 5 | BIP |
| GRANT SET 5 | |

5 bytes

1 byte

6 bytes =

1 byte +(m =5)bytes

| NTi | S3 | S1 | Sq | S3 | S3 |
|---|---|---|---|---|---|
| 8 bit | 8 bit | 8 bit | 8 bit | 8 bit | 8 bit |

Grant Set G3

F1 of Grant Set G3        F2 of Grant Set G3

# Figure 4